# FASCICULE DE BREVET EUROPEEN

(11) **EP 0 659 253 B1**
(45) Date de publication et mention de la délivrance du brevet: **29.12.1997**
(21) Numéro de dépôt: 94921702.0
(22) Date de dépôt: 07.07.1994
(51) Int. Cl.: F16L 27/12, F16L 37/20

(54) **DISPOSITIF DE MONTAGE D'UN ELEMENT SUR UNE PIECE PRESENTANT UN CANAL DE FLUIDE**
VORRICHTUNG ZUR BEFESTIGUNG EINES ELEMENTES AN EINEM BAUTEIL MIT EINEM FLÜSSIGKEITSKANAL
DEVICE FOR MOUNTING AN ELEMENT ON A STRUCTURAL MEMBER WITH A FLUID CHANNEL

(30) Priorité: 09.07.1993 FR 9308524
(43) Date de publication de la demande: 28.06.1995
(73) Titulaire: PRODYS EQUIPEMENT, 38044 Meylan (FR)
(72) Inventeur: CARMONA, Henri, F-38420 Domène (FR)
(74) Mandataire: Hecké, Gérard
(86) Numéro de dépôt international: FR9400845
(87) Numéro de publication internationale: WO9502147

(56) Documents cités:
- EP-A- 0 428 120
- CH-A- 467 426
- US-A- 1 719 223
- US-A- 1 744 467
- US-A- 2 391 885
- US-A- 3 001 804
- US-A- 3 339 832
- US-A- 3 494 641

## Description

### DOMAINE TECHNIQUE DE L'INVENTION

La présente invention concerne un dispositif de montage d'un premier élément sur une pièce tubulaire équipée d'un canal de fluide, et comprenant un second élément monté à coulissement et de manière étanche par rapport audit premier élément.

### ÉTAT DE LA TECHNIQUE

Lorsque l'on souhaite raccorder les canaux de fluide de pièces, notamment de conduites, il se pose d'une part des problèmes d'étanchéité si la pression du fluide est relativement importante et d'autre part des problèmes de liaison mécanique si l'une des pièces doit être interchangée avec d'autres pièces. C'est le cas en particulier dans les appareils de tests de tenue en pression d'organes tels que des radiateurs ou des échangeurs de chaleur de groupes thermiques qui peuvent présenter des embouts de connexion de dimensions différentes. Les mêmes problèmes se posent lorsque l'on souhaite obstruer l'extrémité d'un canal d'une pièce, notamment d'une conduite sous pression.

Le document US-A 3001 804 se rapporte à un dispositif de raccordement étanche entre deux organes tubulaires, lesquels comportent deux embouts engagés axialement l'un dans l'autre pour former un assemblage téléscopique. L'étanchéité est obtenue au moyen de deux joints toriques logés dans des rainures annulaires coaxiales et de mêmes diamètres. Un tel dispositif constitue une étanchéité statique coulissante, autorisant des dilatations linéaires lorsque la conduite est soumise à des variations de températures ou à des contraintes mécaniques.

### SOMMAIRE DE L'INVENTION

L'objet de l'invention consiste à améliorer l'étanchéité de deux pièces raccordées, soumises à des fluides sous pression.

Le dispositif de montage selon l'invention telle que définie dans la revendication 1 est caractérisé en ce que :
- un premier passage axial traversant est agencé dans le second élément,
- des moyens d'accouplement solidarisent le premier élément à la pièce dans une position axiale prédéterminée, dans laquelle le second élément vient en appui axial autour d'une ouverture du canal de fluide de ladite pièce, en autorisant la communication du canal avec ledit premier passage axial,
- un premier joint d'étanchéité est interposé entre le second élément et la pièce,
- et un espace interne s'étend dans la direction axiale entre des faces opposées respectivement des premier et second éléments, ledit espace étant en communication avec le premier passage axial du second élément.

Selon un premier mode de réalisation de l'invention, le second élément peut comporter une tête démontable qui forme l'appui étanche sur ladite pièce. Ainsi, le dispositif de l'invention peut présenter des têtes de formes quelconques pour s'adapter à des secondes pièces de formes conjuguées.

Selon une autre réalisation de l'invention, un ressort peut avantageusement être interposé entre lesdits premier et second éléments, l'action du ressort sollicitant la tête en aboutement contre la pièce pour renforcer l'étanchéité. Le ressort s'étend de préférence à l'intérieur de l'espace, entre les surfaces opposées desdits éléments.

Selon une autre réalisation, le dispositif de raccordement peut avantageusement comprendre des moyens de butées limitant le mouvement axial desdits premier et second éléments l'un par rapport à l'autre.

Selon une réalisation préférentielle, les moyens d'accouplement comportent au moins un bras monté pivotant sur ledit premier élément et adapté pour venir en prise avec un organe de retenue de ladite pièce.

Selon une autre variante de réalisation, le premier élément est formé par un bouchon d'obturation.

Selon une autre variante, l'étanchéité de l'espace interne rempli de fluide sous pression, est assuré au moyen d'un soufflet, lequel peut être réalisé en matériau soit métallique, soit plastique, soit en caoutchouc.

### DESCRIPTION DES DESSINS

D'autres avantages et caractéristiques ressortiront plus clairement de la description qui va suivre de différents types de dispositifs selon modes de réalisation de l'invention donnés à titre d'exemples non limitatifs, et représentés aux dessins annexés, dans lesquels:
- la figure 1 représente une coupe longitudinale d'un dispositif de montage selon un mode de réalisation de l'invention pour raccorder deux conduites;
- la figure 2 représente une vue extérieure de dessus du dispositif de la figure 1;
- la figure 3 montre une coupe partielle longitudinale du dispositif de montage de la figure 1, adapté pour obstruer une conduite.
- la figure 4 est une vue identique de la figure 1 représentant une variante de réalisation.

### DESCRIPTION DÉTAILLÉE DE L'INVENTION

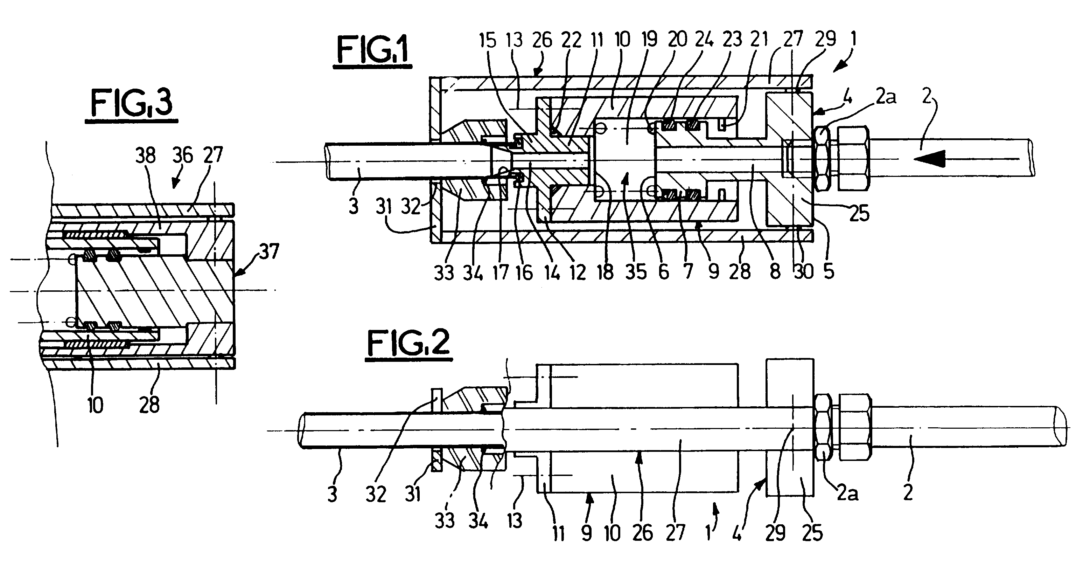

Le dispositif de montage représenté sur les figures 1 et 2, constitue un dispositif de raccordement, repéré d'une manière générale par la référence 1, et destiné à relier l'embout rigide d'une conduite 2 présentant un premier canal de fluide à l'embout rigide d'une conduite 3 présentant un deuxième canal de fluide.

La conduite 2 peut être reliée à une source de pression, notamment d'un banc de tests, et la conduite 3 peut être raccordée à un appareil à tester la pression.

Le dispositif de raccordement 1 comprend un premier élément 4 de section générale cylindrique, présentant une face arrière 5, une face avant 6, une partie avant périphérique 7 cylindrique et un passage axial 8.

Le dispositif de raccordement 1 comprend également un second élément 9 de section générale cylindrique. Cet élément 9, en deux parties, comprend un manchon 10 dans lequel est engagée, pour coulisser axialement, la partie avant 7 de l'élément 4, et une tête démontable 11 fixée contre la face avant radiale 12 du manchon 10 grâce à des vis longitudinales 13.

La tête 11, engagée par l'arrière dans le manchon 10, présente un passage axial 14 et une protubérance 15 équipée sur la face frontale d'un joint annulaire 16. La protubérance 15 présente en plus un prolongement cylindrique axial 17 susceptible de s'engager dans le canal de la conduite 3.

Le manchon 10 présente, intérieurement une face radiale 18 séparée axialement de la face radiale avant 6 du premier élément 4, pour délimiter un espace interne 19.Un ressort 20 est disposé entre les faces 6 et 18, en sollicitant l'écartement dans le sens axial du manchon 10 et du premier élément 4.

Le manchon 10 du deuxième élément 9 présente une saillie interne 21 servant de butée à la partie cylindrique avant 7 de l'élément 4 pour limiter la course axiale sous la sollicitation de la force de rappel exercée par le ressort 20.

Entre la face avant 12 du manchon 10 et la face arrière correspondante de la tête 11 est interposé un joint d'étanchéité annulaire 22.Entre la surface périphérique extérieure de la partie avant 7 de l'élément 4 et la surface périphérique intérieure du manchon 10 de l'élément 9 sont interposés deux autres joints d'étanchéité annulaires 23,24.

A l'arrière, le premier élément 4 comporte une partie cylindrique 25 séparée axialement du manchon 10, et ayant un diamètre extérieur légèrement supérieur au diamètre extérieur du manchon 10.

Le dispositif de raccordement 1 comprend également des moyens d'accouplement 26 composés de deux bras 27,28 longitudinaux, articulés sur la partie arrière 25 de l'élément 4 grâce à des pivots radiaux 29,30 diamétralement opposés. Les autres extrémités opposées des bras 27,28 sont reliés par une traverse 31.

La longueur et l'écartement des bras 27,28 parallèles autorisent un mouvement de pivotement autour des pivots 29 et 30 en entourant coaxialement l'élément 9.La traverse 31 est équipée d'un évidement axial 32 se trouvant en saillie par rapport à la tête 11, et destiné à entourer avec jeu la conduite 3.

Le dispositif de raccordement 1 peut être utilisé de la manière suivante: L'embout de la conduite 2 est d'abord fixé à l'arrière du premier élément 4, notamment par vissage au moyen d'un écrou 2a, de manière à assurer la mise en communication de la conduite 2 avec le passage 8 axial. A l'opposé, l'extrémité de l'autre conduite 3 est appliquée en aboutement sur le joint d'étanchéité 16 de la tête 11.

Le ressort 20 est ensuite comprimé suite à un mouvement de rapprochement axial des éléments 4 et 9. Les bras 27, 28 des moyens d'accouplement sont ensuite actionnés vers la position active, dans laquelle la traverse 31 coopère avec un embout 33 de la conduite 3, se trouvant en butée contre un épaulement externe 34. La conduite 3 traverse axialement l'évidement 32 de la traverse 31, et les bras 27, 28 s'étendent dans la direction longitudinale.

Sous l'effet du ressort 20, l'extrémité de la conduite 3 est maintenue d'une manière permanente en appui contre le joint d'étanchéité 16.La pression du fluide à l'intérieur du passage 35 entre les éléments coulissants 4,9 agit sur les faces opposées 6 et 18 de l'espace 19 interne et tend à déplacer l'élément 9 vers la droite pour renforcer l'effort d'écrasement du joint d'étanchéité 16 entre la tête 11 et l'extrémité de la conduite 3. En conséquence, plus la pression du fluide est grande, plus cet effort d'écrasement est grand et l'étanchéité mieux assurée. De plus, des pressions inférieures à la pression externe peuvent être appliquées, étant donné que la tête 11 continue d'appliquer le joint 16 en aboutement contre la conduite 3, grâce à l'action du ressort 20.

Le dispositif de raccordement 1 peut être installé et démonté rapidement, et présente d'autre part des qualités d'étanchéité remarquables directement proportionnelles à la valeur de la pression du fluide véhiculé. En outre, il peut être accouplé à des conduites 3 de dimensions et de formes différentes, après avoir interchangé la tête 11.

En référence à la figure 3, le dispositif de montage est utilisé pour constituer un bouchon d'obturation de la conduite 3. Le dispositif de montage 36 comprend un élément 37 plein, et une partie cylindrique extérieure 38 engagée autour du manchon 10 afin d'améliorer le guidage axial de ce dernier. Les extrémités des bras 27,28 des moyens d'accouplement 26 sont portées par l'élément 37. Ce dispositif de montage 36 formant un bouchon d'extrémité pour la conduite 3, fonctionne de la même manière et présente les mêmes avantages que le dispositif de raccordement 1.

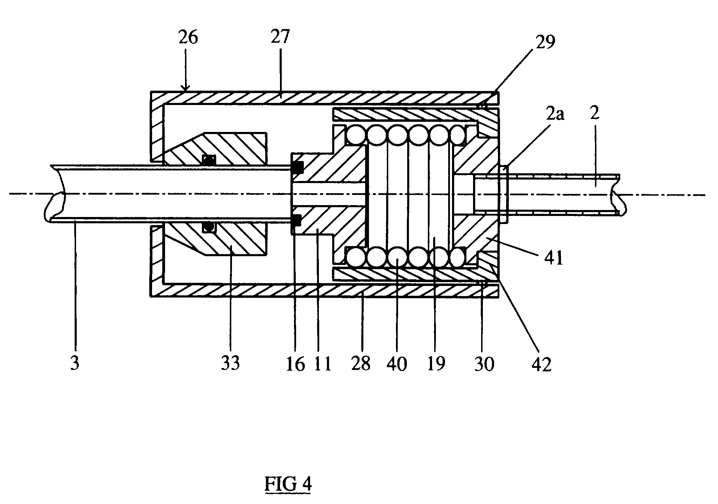

Selon la variante de la figure 4, les mêmes numéros de repères seront utilisés pour désigner des pièces similaires à celles de la figure 1.L'étanchéité de l'espace 19 interne est réalisée au moyen d'un soufflet 40 métallique, par exemple en acier inoxydable, soudé sur des épaulements de la tête 11, et de l'embout 41, auquel est raccordé la conduite 2. L'embout 41 porte d'autre part une douille 42 annulaire servant de pièce d'interface de liaison assurant la protection et le guidage axial du soufflet 40. Il est clair que le soufflet 40 peut être réalisé en un autre matériau, notamment en plastique, ou en caoutchouc.

La présence du soufflet 40 à dilatation axiale, permet d'obtenir une étanchéité parfaite de l'espace 19, et les joints 23,24,22 du dispositif de la figure 1 peuvent alors être supprimés.

Dans les deux dispositifs des figures 1 et 4, on remarque que le diamètre de la face de support du joint d'étanchéité 16 entre la tête 11 et l'extrémité de la conduite 3, est inférieur au diamètre de l'espace 19 interne rempli de fluide sous pression. Cette différence de diamètres permet d'obtenir un effet multiplicateur de la force d'aboutement du joint 16 contre l'extrémité de la conduite 3.

La pièce 3 creuse peut avoir une section quelconque sans que l'étanchéité en soit affectée.

## Revendications

1. Dispositif de montage (1) d'un premier élément (4;37;41,42) sur une pièce (3) tubulaire équipée d'un canal de fluide, et comprenant un second élément (9;11) monté à coulissement et de manière étanche par rapport audit premier élément (4;37;41,42), caractérisé en ce que
- un premier passage axial traversant (35) est agencé dans le second élément (9),
- des moyens d'accouplement (26) solidarisent le premier élément (4,37) à la pièce (3) dans une position axiale prédéterminée, dans laquelle le second élément (9;11) vient en appui axial autour d'une ouverture du canal de fluide de ladite pièce (3), en autorisant la communication du canal avec ledit premier passage axial (35),
- un premier joint d'étanchéité (16) est interposé en aboutement axial entre le second élément (9) et la pièce (3),
- et un espace interne (19) s'étend dans la direction axiale entre des faces opposées (6,18) respectivement des premier et second éléments (4,9), ledit espace étant parcouru par le fluide, et se trouvant en communication avec le premier passage axial (35) du second élément (9;11)

2. Dispositif selon la revendication 1, caractérisé en ce que le second élément (9) comprend une tête démontable (11) équipée d'une face de support du premier joint (16).

3. Dispositif selon la revendication 1 ou 2, caractérisé en ce qu'un ressort (20) est interposé entre lesdits premier et second éléments (4,9) pour renforcer l'écrasement du premier joint (16) monté en aboutement contre la pièce 3, ledit ressort (20) s'étendant dans l'espace (19) entre les faces opposées (6,18) des premier et second éléments (4,9).

4. Dispositif selon la revendication 1, caractérisé en ce que l'un des éléments (4,9) est équipé de moyens de butées (21) destinés à limiter le mouvement de coulissement axial du second élément (9) par rapport au premier élément (4).

5. Dispositif selon la revendication 1, caractérisé en ce qu'au moins un deuxième joint d'étanchéité (23,24) est interposé entre le premier élément (4) et le deuxième élément (9).

6. Dispositif selon la revendication 1, caractérisé en ce que lesdits moyens d'accouplement (26) comportent un organe de maintien destiné à s'agripper à la pièce (3) dans une zone située à l'opposé du premier joint (16).

7. Dispositif selon la revendication 6, caractérisé en ce que lesdits moyens d'accouplement (26) comprennent au moins un bras (27) monté à pivotement sur ledit premier élément (4) à l'opposé de l'organe de maintien.

8. Dispositif selon la revendication 1, caractérisé en ce que lesdits premier et second éléments (4,9) présentent chacun une section circulaire, ledit second élément (9) comportant une partie (17) destinée à se centrer par rapport à la pièce (3).

9. Dispositif selon la revendication 1, caractérisé en ce que la pièce (3) est formée par une conduite venant en aboutement axial contre le second élément (9), ledit premier élément (4) comprenant un deuxième passage axial (8) traversant, en communication avec une autre conduite (2) reliable à une source de fluide sous pression.

10. Dispositif selon la revendication 1, caractérisé en ce que ledit premier élément constitue un bouchon (37) d'obturation.

11. Dispositif selon la revendication 2, caractérisé en ce que le diamètre de la face de support du premier joint d'étanchéité (16) est inférieur au diamètre de l'espace (19) interne rempli de fluide sous pression, pour obtenir un effet multiplicateur de la force d'aboutement du premier joint (16) contre la pièce (3).

12. Dispositif selon la revendication 9, caractérisé en ce qu'un soufflet 40 à dilatation axiale est monté à étanchéité dans l'espace interne (19) entre une tête (11) constituant ledit second élément et un embout (41) solidaire de la conduite (2).

13. Dispositif selon la revendication 1 ou 11, caractérisé en ce que le second élémént (9) est sollicité contre la pièce (3) par la pression du fluide dans l'espace (19), l'effort d'écrasement du premier joint (16) étant dépendant de ladite pression.

## Patentansprüche

1. Montagevorrichtung (1) eines ersten Elements (4; 37; 41, 42) auf einem mit einem Flüssigkeitskanal ausgerüsteten rohrförmigen Teil (3), und mit einem zweiten Element (9; 11), das gleitend und schlüssig in bezug auf das erste Element (4; 37; 41, 42) montiert ist, dadurch gekennzeichnet, dass
- Ein erster axialer Durchlass (35) im zweiten Element (9) angeordnet ist,
- Kupplungsmittel (26) das erste Element (4, 37) mit dem Teil (3) in einer vorbestimmten axialen Position verbinden, in der sich das zweite Element (9; 11) axial um eine Öffnung des Flüssigkeitskanals des Teils (3) herum abstützt und dadurch die Verbindung des Kanals mit dem ersten axialen Durchlass (35) ermöglicht,
- ein erster Dichtring (16) am axialen Ende zwischen dem zweiten Element (9) und dem Teil (3) eingefügt ist, und
- Ein Innenraum (19), der in der axialen Richtung zwischen gegenüberliegenden Seiten (6, 18) jeweils des ersten und zweiten Elements (4, 9) sich erstreckt, wobei der Raum von der Flüssigkeit durchlaufen wird und sich in Verbindung mit dem ersten axialen Durchlass (35) des zweiten Elements (9; 11) befindet.

2. Vorrichtung nach Anspruch 1, dadurch gekennzeichnet, dass das zweite Element (9) einen demontierbaren Kopf (11) umfasst, der mit einer Trägerseite des ersten Dichtrings (16) ausgerüstet ist.

3. Vorrichtung nach Anspruch 1 oder 2, dadurch gekennzeichnet, dass zwischen dem ersten und dem zweiten Element (4, 9) eine Feder (20) eingefügt ist, um das Zusammendrücken des ersten, gegen das Teil 3 montierten Dichtrings (16) zu verstärken, wobei sich die Feder (20) im Raum (19) zwischen den gegenüberliegenden Seiten (6, 18) des ersten und zweiten Elements (4, 9) erstreckt.

4. Vorrichtung nach Anspruch 1, dadurch gekennzeichnet, dass eines der Elemente (4, 9) mit Anschlagmittel (21) ausgerüstet ist, die die axiale Gleitbewegung des zweiten Elements (9) in bezug auf das erste Element (4) begrenzen sollen.

5. Vorrichtung nach Anspruch 1, dadurch gekennzeichnet, dass mindestens ein zweiter Dichtring (23, 24) zwischen dem ersten Element (4) und dem zweiten Element (9) eingefügt ist.

6. Vorrichtung nach Anspruch 1, dadurch gekennzeichnet, dass die Kupplungsmittel (26) ein Halteorgan umfassen, dass in das Teil (3) eingreifen soll, in einem dem ersten Dichtring (16) gegenüberliegenden Bereich.

7. Vorrichtung nach Anspruch 6, dadurch gekennzeichnet, dass die Kupplungsmittel (26) mindestens einen Arm (27) umfassen, der schwenkend am besagten ersten Element (4) gegenüber dem Halteorgan montiert ist.

8. Vorrichtung nach Anspruch 1, dadurch gekennzeichnet, dass das erste und das zweite Element (4, 9) jeweils einen runden Querschnitt aufweisen, wobei das zweite Element (9) einen Teil (17) umfasst, der sich in bezug auf das Teil (3) zentrieren soll.

9. Vorrichtung nach Anspruch 1, dadurch gekennzeichnet, dass das Teil (3) von einem Rohr gebildet wird, das axial gegen das zweite Element (9) abschliesst, wobei das erste Element (4) einen zweiten axialen Durchlass (8) aufweist, der mit einem anderen Rohr (2) in Verbindung steht, das an eine unter Druck stehende Flüssigkeitsquelle angeschlossen werden kann.

10. Vorrichtung nach Anspruch 1, dadurch gekennzeichnet, dass das erste Element einen Verschlusstopfen (37) bildet.

11. Vorrichtung nach Anspruch 2, dadurch gekennzeichnet, dass der Durchmesser der Trägerseite des ersten Dichtrings (16) kleiner als der Durchmesser des mit der unter Druck stehenden Flüssigkeit gefüllten Innenraums (19) ist, um eine Multiplikationswirkung der Abschlusskraft des ersten Dichtrings (16) gegen das Teil (3) zu erzielen.

12. Vorrichtung nach Anspruch 9, dadurch gekennzeichnet, dass im Innenraum (19), zwischen einem, das zweite Element bildeden Kopf (11) und einem am Rohr (2) angesetzten Stutzen (41), ein Balg (40) mit axialer Dehnung schlüssig montiert ist.

13. Vorrichtung nach Anspruch 1 oder 11, dadurch gekennzeichnet, dass das zweite Element (9) vom Druck der Flüssigkeit im Raum (19) gegen das Teil (3) gedrückt wird, wobei die Zusammendrückkraft des ersten Dichtrings (16) vom Druck abhängig ist.

## Claims

1. A device (1) for mounting a first element (4, 37 ; 41, 42) on a tubular part (3) provided with a fluid runner and comprising a second element (9 ; 11) slideably and sealingly mounted with respect to the first element (4, 37 ; 41, 42), characterised in that :
- a first axial through hole (35) is arranged in the second element (9),
- coupling means (26) make the first element (4, 37) integral with the part (3) in a predetermined axial position, wherein the second element (9, 11) axially rests around an opening of the fluid runner of said part (3), and allows for the communication between the runner and said first axial through hole (35),
- a first seal (16) is inserted and axially abutting between the second element (9) and the part (3),
- and an internal space (19) extends, in the axial direction, between opposed faces (6, 18) of the first and second elements, respectively (4, 9), the fluid running in said space which is in fluid communication with the first axial through hole (35) of the second element (9, 11).

2. A device as claimed in claim 1, characterised in that the second element (9) comprises a dismountable head (11) provided with a supporting face the first seal (16).

3. A device as claimed in claims 1 or 2, characterised in that a spring (20) is inserted between said first and second elements (4, 9) for enhancing the crushing of the first seal (16) abutting against the part (3), said spring (20) extending in the space (19) between the opposed faces (6, 18) of the first and second elements (4, 9).

4. A device as claimed in claim 1, characterised in that one of the elements (4, 9) is provided with abutting means (21) for limiting the axially sliding motion of the second element (9) with respect to the first element (4).

5. A device as claimed in claim 1, characterised in that at least a second seal (23, 24) is inserted between the first element (4) and the second element (9).

6. A device as claimed in claim 1, characterised in that said coupling means (26) includes a holding mechanism to be engaged with the part (3) in a region opposite the first seal (16).

7. A device as claimed in claim 6, characterised in that said coupling means (26) comprises at least one arm (27) rotatably mounted on said first element (4) at the opposite of the holding means.

8. A device as claimed in claim 1, characterised in that said first and second elements (4, 9) each have a circular section, said second element (9) including a portion (17) to be centered with respect to the part (3).

9. A device as claimed in claim 1, characterised in that the part (3) is formed by a pipe axially abutting against the second element (9), said first element (4) comprising a second axial through hole (8) in communication with another pipe (2) which can be connected to a pressurised fluid source.

10. A device as claimed in claim 1, characterised in that said first element constitutes a sealing plug (37).

11. A device as claimed in claim 2, characterised in that the diameter of the first seal (16) supporting face is smaller than the diameter of the internal space (19) filled with pressurised fluid, so that the abutting force of the first seal (16) against the part (3) is multiplied.

12. A device as claimed in claim 9, characterised in that an axial expansion bellows (40) is sealed in the internal space (19) between a head (11) composing said second element (9) and a socket (41) integrally mounted on the pipe (2).

13. A device as claimed in claim 1 or claim 11, characterised in that the second element (9) is pushed against the part (3) by the pressure of the fluid in the space (19), with the crushing stress of the first seal (16) depending on said pressure.
